# EUROPÄISCHE PATENTSCHRIFT

(11) **EP 0 990 293 B1**
(45) Veröffentlichungstag und Bekanntmachung des Hinweises auf die Patenterteilung: **04.07.2001**
(21) Anmeldenummer: 99919229.7
(22) Anmeldetag: 14.04.1999
(51) Int. Cl.: H02H 7/08

(54) **VERFAHREN ZUR PHASENAUSFALLERKENNUNG BEI EINER ASYNCHRONMASCHINE**
METHOD FOR DETECTING PHASE FAILURE IN AN ASYNCHRONOUS MACHINE
PROCEDE POUR LA DETECTION DE DEFAILLANCE DE PHASE DANS UN MOTEUR ASYNCHRONE

(30) Priorität: 17.04.1998 DE 19817224
(43) Veröffentlichungstag der Anmeldung: 05.04.2000
(73) Patentinhaber: Lenze GmbH & Co. KG Aerzen, D-31855 Aerzen (DE)
(72) Erfinder: KRIETEMEIER, Jürgen, D-31855 Aerzen (DE); HARTMANN, Elmar, D-31787 Hameln (DE); SCHNURBUSCH, Wolfgang, D-31863 Coppenbrügge (DE)
(74) Vertreter: Elbertzhagen, Otto, Dipl.-Ing.
(86) Internationale Anmeldenummer: EP9902486
(87) Internationale Veröffentlichungsnummer: WO9954979

(56) Entgegenhaltungen:
- DE-A- 4 232 476

## Beschreibung

### TECHNISCHES GEBIET

Die Erfindung bezieht sich auf ein Verfahren zur Erkennung des Ausfalls einer Phase einer umrichtergesteuerten Dreiphasen-Asynchronmaschine gemäß den Gattungsmerkmalen des Patentanspruchs 1.

### STAND DER TECHNIK

Ein Verfahren dieser Art ist aus der deutschen Patentschrift DE 32 28 954 C2 bekannt. Dort wird für jede Phase eines Asynchronmotors ein dem Effektivwert des jeweiligen Phasenstromes entsprechendes elektrisches Signal erzeugt, welches in einer Vergleichsschaltung mit einem voreinstellbaren Grenzwert verglichen wird. Wird von diesem Grenzwert abgewichen, wird zum Schutz des Asynchronmotors ein Abschaltsignal erzeugt. Darüberhinaus ist noch ein Vergleich sämtlicher Signale, die den Effektivwert aller Phasenströme repräsentieren, vorgesehen, um beim Abweichen von einer voreinstellbaren Differenz ebenfalls das Abschaltsignal zu erzeugen. Da bei einer stromrichtergespeisten Asynchronmaschine eine solche Schutzeinrichtung nur ab einer bestimmten Frequenz funktioniert, muß bei Unterschreiten einer vorgegebenen Frequenzgrenze noch zusätzlich ein Spannungsvergleich vorgenommen werden, um die jeweils am Asynchronmotor anliegende Spannung auf Übereinstimmung mit der der augenblicklichen Frequenz zugehörigen Sollspannung des Umrichters zu überprüfen. Insgesamt geht es bei der vorbekannten Schutzeinrichtung im wesentlichen darum, bei einem Abweichen von der Stromsymmetrie das Abschaltsignal zu erzeugen.

Nach einem ähnlichen Verfahren arbeitet die Schaltungsanordnung zur Erkennung eines Phasenausfalls bei einem Drehstrommotor nach der deutschen Offenlegungsschrift DE 23 03 993 Al. Auch hier funktioniert die Anzeige des Phasenausfalls erst ab einer bestimmten Frequenz, die durch die Zeitkonstante des Filters in der Vergleichsschaltung bestimmt wird. Deshalb gibt es bei kleinen Drehfeldfrequenzen bei einem Phasenausfall keine Fehleranzeige, folglich können nicht alle Betriebszustände bzw. Betriebspunkte einer Asynchronmaschine hiermit überwacht werden.

### DARSTELLUNG DER ERFINDUNG

Der Erfindung liegt deshalb die Aufgabe zugrunde, ein Verfahren der eingangs genannten Art zu schaffen, bei dem über den gesamten Frequenzbereich des Antriebssystems hinweg, also vom Stillstand bis zur maximalen Frequenz einschließlich der Gleichstromspeisung, eine zuverlässige Meldung eines Phasenausfalls unter Auswertung des Auslösesignals ermöglicht wird.

Diese Aufgabe wird bei einem Verfahren der gattungsbildenden Art durch die kennzeichnenden Merkmale des Patentanspruchs 1 gelöst.

Für die Erfindung ist wesentlich, daß für die Erzeugung des Auslösesignals von den Momentanwerten der Phasenströme ausgegangen wird und immer dann das Auslösesignal ansteht, während in jeder der Überwachungsstufen der Momentanwert des Phasenstromes den voreinstellbaren Grenzwert unterschreitet. Es ist für den Betriebszustand einer Asynchronmaschine völlig normal, daß die Momentanwerte der Phasenströme den Grenzwert unterschreiten und auch einen Nullwert durchlaufen, folglich wird jedes Mal in diesen Fällen im ersten Überwachungszustand das Auslösesignal erzeugt, welches dann jedoch nur von zeitlich kurzer Dauer ist. Deshalb wird in der zweiten Überwachungsstufe überprüft, ob der Phasenstrom der betreffenden Phase in normaler Weise dem Spannungsvektor oder Motorspannungssollanzeiger nacheilt und den Grenzwert in einer vorgegebenen Zeiteinheit wieder überschreitet, womit dann das Auslösesignal entfällt. In diesem Normalfall wird sofort wieder in den ersten Überwachungszustand zurückgewechselt. Steht jedoch das Auslösesignal länger an als der Spannungsvektor zeitlich braucht, um den vorbestimmten Drehwinkel zu überstreichen, dann wird in die dritte Überwachungsstufe übergewechselt. Hier erfolgt der Vergleich der Dauer des Auslösesignals mit dem festgelegten Verzögerungszeitintervall, wobei dann die Meldung des Phasenausfalls erfolgt, wenn die Dauer des Auslösesignals das Verzögerungszeitintervall überschreitet. Die Filterfunktion in der dritten Überwachungsstufe verhindert ein vorzeitiges oder falsches Auslösen des Phasenausfallsignals, was insbesondere im Feldschwächbereich von Vorteil ist.

Für den praktischen Betrieb ist es zweckmäßig, im zweiten Überwachungszustand den Vergleichsdrehwinkel für den Spannungsvektor mit 90 Grad elektrisch festzulegen. Der Drehwinkel des Spannungsvektors ist dem Drehfeldwinkel gleichzusetzen, und es versteht sich, daß der in einer Zeiteinheit zurückgelegte Drehfeldwinkel der Drehfeldfrequenz proportional ist. Im Normalbetrieb der Asynchronmaschine ändert sich während des Überstreichens des vorgegebenen Drehwinkels durch den Spannungsvektor der Phasenstrom und überschreitet den voreingestellten Grenzwert. Ändert sich hingegen der Phasenstrom während dieser Zeitdauer nicht, weicht die Asynchronmaschine von ihrem normalen Betriebsverhalten ab und es liegt wahrscheinlich ein Fehler vor, der jedenfalls dann zur Meldung des Phasenausfalls und Abschalten der Asynchronmaschine führt, wenn das Fehlerkriterium in der dritten Überwachungsstufe erfüllt ist.

Das erfindungsgemäße Verfahren ist besonders geeignet für eine umrichterseitige Steuerung des gesamten Antriebssystems, womit die entsprechenden Werte am Umrichterausgang abgegriffen werden können. Es ist nicht erforderlich, bei der Speisung einer Dreiphasen-Asynchronmaschine alle drei Phasen zu überwachen, da aus zwei erfaßten Phasentrömen jeweils der Momentanwert des dritten Phasenstromes errechnet werden kann. So ist auch der Fall denkbar, daß bei der Überwachung von zwei der drei Phasenströme beide Momentanwerte der überwachten Phasenströme kleiner als die Komparatorschwelle sind, also unterhalb des vorgegebenen Grenzwertes liegen. In dieser Situation wird eine separate, unabhängige Zeitmessung von Null gestartet, die ein gesondertes Verzögerungszeitintervall überdauert. Bleibt der Zustand konstant, überschreiten also die Phasenströme mit ihren Momentanwerten die Komparatorschwelle nicht, wird ebenfalls Phasenausfall der Asynchronmaschine gemeldet und gegebenenfalls Abschaltung veranlaßt. Dies kann aber auch bedeuten, daß an den Umrichter gar keine Asynchronmaschine angeschlossen ist oder der Anschluß der Asynchronmaschine nicht ordnungsgemäß ist.

Insgesamt eignet sich das erfindunggemäße Verfahren sowohl für stromgeregelte als auch für spannungsgesteuerte Umrichter, und es wird der gesamte Momentenbereich der angeschlossenen Asynchronmaschine inklusive Leerlauf in beliebiger Drehrichtung abgedeckt, die Überwachung funktioniert also beim Betrieb in allen vier Quadranten der M/n-Kennlinie der Asynchronmaschine. Zudem wird ein gleichzeitiger Ausfall mehrerer Phasen der Asynchronmaschine erkannt und letztlich ist das erfindungsgemäße Verfahren analog auch bei anderen Mehrphasensystemen anwendbar.

### KURZE BESCHREIBUNG DER ZEICHNUNG

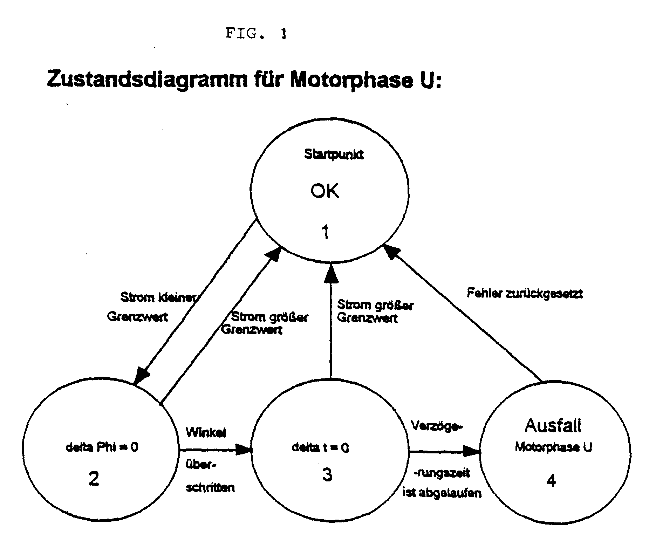

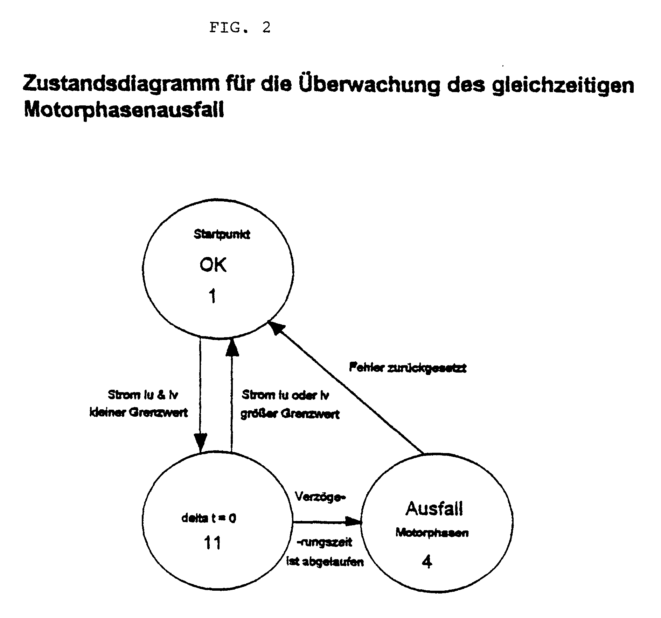

Anhand der Figuren 1 und 2 wird die Funktion des erfindungsgemäßen Verfahrens noch näher erläutert. Es zeigen:
- Fig. 1: ein Zustandsdiagramm für Motorphase U,
- Fig. 2: ein Zustandsdiagramm für die Überwachung des gleichzeitigen Motorphasenausfalls

### WEGE ZUR AUSFÜHRUNG DER ERFINDUNG

Die Momentanwerte der drei Motorströme werden simultan erfaßt und durch jeweils einen Fensterkomparator überwacht, dies ist der Überwachungszustand 1. Das Überwachungsfenster ist spiegelbildlich um den Nullpunkt herum angeordnet, die Grenzwerte für den Vergleich mit den Momentanwerten der Phasenströme werden jeweils passend eingestellt. Im Regelfall ist davon auszugehen, daß die Grenzwerte etwa 2 bis 5 % vom Motornennstrom betragen sollen. Unterschreitet der Momentanwert des Phasenstroms den eingestellten Grenzwert, wechselt die Überwachung in den der Phase zugeordneten Überwachungszustand 2.

Nun wird der Spannungsvektor in dieser Phase zum Vergleich herangezogen. Hat der Spannungsvektor einen Winkel von 90 Grad elektrisch überstrichen und hat während dieser Zeit der Momentanwert des Motorstroms in dieser Phase die Komparatorgrenze nicht überschritten, so erfolgt der Wechsel in den Überwachungszustand 3. Andernfalls wechselt das Überwachungssystem in den Zustand 1 zurück. Die unabhängige Winkelbeobachtung wird zugehörig zur jeweiligen Phase vom momentanen Spannungssollwinkel begonnen, wobei es jeweils um eine Winkeldifferenz von 90 Grad elektrisch geht. Im Unterschied zu dem elektrischen Drehwinkel steht der mechanische Drehwinkel, der in gleicher Zeit vom Läufer der Asynchronmaschine zurückgelegt wird. Bekanntlich sind der mechanische und der elektrische Winkel über die Motorpolzahl miteinander verknüpft.

Im Überwachungszustand 3 wird im Komparator eine unabhängige Zeitmessung von Null aus gestartet. Diese Zeitmessung überdauert ein vorgegebenes Verzögerungszeitintervall und bleibt während dieses Verzögerungszeitintervalls der Zustand des Motorphasenstroms unverändert, wird von dem Überwachungszustand 3 in den Zustand 4 gewechselt. Der Zustand 4 bedeutet, es wird Phasenausfall gemeldet, gegebenenfalls wird die an den Umrichter angeschlossene Asynchronmaschine abgeschaltet. Über ein Rücksetzsignal kann der Zustand 4 verlassen werden.

Es sei nochmals betont, daß der Wechsel der Überwachungszustände 2 oder 3 in den Überwachungszustand 1 sofort erfolgt, sobald der Momentanwert des Stroms in der betreffenden Motorphase den jeweils eingestellten Grenzwert überschreitet.

Es müssen nicht alle drei Phasenströme der Asynchronmaschine gemessen werden, es ist ausreichend, wenn der dritte Phasenstrom berechnet wird. Dazu werden die Ströme Iu und Iv gemessen und der dritte Strom Iw durch Subtraktion der beiden gemessenen Ströme gebildet. Ist einer der drei Phasenströme Iu, Iv, Iw vom Betrag her kleiner als die Komparatorschwelle, wird die Überwachung aktiv.

Die Zustandsdiagramme für die beiden weiteren Motorphasen U und W zeigt Fig. 1. So wird gegebenenfalls für jede Motorphase der Überwachungszustand 2 und der Überwachungszustand 3 durchlaufen.

Ein gleichzeitiger Ausfall von zwei Phasen der Asynchronmaschine bedeutet, daß die Phasenströme Iu und Iv vom Betrag her gleichzeitig entsprechend der Wechselrichterfreigabe kleiner als die Komparatorschwelle werden und in diesem Fall wird von dem Überwachungszustand 1 in den mit 11 gekennzeichneten Überwachungszustand gewechselt.

Im Überwachungszustand 11 wird wiederum eine unabhängige Zeitmessung zugehörig zum Komparator von Null aus gestartet. Ist der Zustand der beiden Phasenströme über das eingestellte Verzögerungszeitintervall konstant, wird vom Überwachungszustand 11 wiederum in den Zustand 4 gewechselt. Andernfalls, wenn also im Überwachungszustand 11 der Komparatorausgang wechselt, wird in den Überwachungszustand 1 zurückgegangen. Bei Wechseln in den Zustand 4 wird auch hier Motorphasenausfall gemeldet, und es kann über ein Rücksetzsignal der Zustand 4 wieder verlassen werden.

In den Figuren 1 und 2 sind die einzelnen Zustände durch die Angaben in den Kreisen veranschaulicht, wobei der Signalaustausch durch Pfeile dargestellt ist. Diese Pfeile repräsentieren das sogenannte Auslösesignal, das jeweils bei Unterschreiten der Kompatorschwelle vorhanden ist oder entfällt, was der entgegensetzten Pfeilrichtung entspricht.

## Patentansprüche

1. Verfahren zur Erkennung des Ausfalls einer Phase einer umrichtergesteuerten Dreiphasen-Asynchronmaschine mit einer Überwachung von zumindest zwei Phasenströmen in je einer Überwachungsstufe einer Überwachungsschaltung, die beim Unterschreiten eines Grenzwertes für die betreffende Überwachungsstufe ein Auslösesignal erzeugt,
dadurch gekennzeichnet,
daß in einem ersten Überwachungszustand in jeder Überwachungsstufe der Momentanwert des Phasenstroms mit dem Grenzwert verglichen und während dessen Unterschreitung das Auslösesignal erzeugt wird, wonach bei anstehendem Auslösesignal von dem ersten in einen zweiten Überwachungszustand gewechselt und in diesem Zustand die Dauer des Auslösesignals mit dem vom mit dem Drehfeld mitdrehenden Spannungsvektor der Phase überstrichenen Drehwinkel verglichen wird, wobei beim Anstehen des Auslösesignals über einen vorgegebenen Drehfeldwinkel hinweg in einen dritten Überwachungszustand übergegangen und hier das Anstehen des Auslösesignals während eines definierten Verzögerungszeitintervalls überprüft wird, bei dessen Überdauerung durch das Auslösesignal Phasenausfall gemeldet wird.

2. Verfahren nach Anspruch 1,
dadurch gekennzeichnet,
daß im zweiten Überwachungszustand der Vergleichsdrehwinkel des Spannungsvektors 90 Grad elektrisch beträgt.

3. Verfahren nach Anspruch 1 oder 2,
dadurch gekennzeichnet,
daß im Falle der gleichzeitigen Unterschreitung des Grenzwertes durch die Momentanwerte zweier Phasenströme über die Auslösesignale der zugehörigen Überwachungsstufen eine Zeitmessung über ein gesondertes Verzögerungszeitintervall hinweg gestartet wird, für dessen Überdauerung durch die Auslösesignale Phasenausfall gemeldet wird.

## Claims

1. Method for detecting the failure of a phase of a frequency-changer controlled triple-phase asynchronous machine having monitoring of at least two phase currents in each monitoring stage of a monitoring circuit which, when a threshold value for the relevant monitoring stage is understepped, produces a trigger signal,
characterised in that
in a first monitoring state in each monitoring stage the momentary value of the phase current is compared with the threshold value and whilst this value is understepped the trigger signal is produced, according to which with the ensuing trigger signal a change is made from the first monitoring state to a second monitoring state and in this state the duration of the trigger signal is compared with the rotational angle covered by the voltage vector of the phase co-rotating with the rotary field, wherein with the ensuing trigger signal beyond a predetermined rotational angle a change is made into a third monitoring state and here the presence of the trigger signal is checked during a defined time delay interval, and the phase failure is announced when this is exceeded through the trigger signal.

2. Method according to claim 1 characterised in that in the second monitoring state the comparison rotational angle of the voltage vector amounts electrically to 90 degrees.

3. Method according to claim 1 or 2 characterised in that in the event of the simultaneous understepping of the threshold value through the momentary values of two phase currents, a time measurement beyond a separate delay time interval is started through the trigger signals of the associated monitoring stages and a phase failure is notified when this is exceeded through the trigger signals.

## Revendications

1. Procédé pour la détection de la défaillance d'une phase dans une machine asynchrone triphasée, commandée par mutateur avec contrôle d'au moins deux courants de phase, respectivement dans un élément d'un circuit de contrôle qui génère un signal de déclenchement pour l'élément de contrôle concerné, quand une valeur-limite est sous-dépassée,
caractérisé en ce que,
dans le cadre d'un premier état de contrôle, dans chaque élément de contrôle, la valeur instantanée du courant de phase est comparée avec la valeur limite et qu'un signal de déclenchement est généré quand celle-ci est sous-dépassée, ce après quoi, en présence d'un signal de déclenchement, une transition est effectuée du premier au deuxième état de contrôle, dans le cadre duquel la durée du signal de déclenchement est comparée avec un angle de rotation balayé par le vecteur de tension de la phase, lequel est en corrélation rotative avec le champ de rotation, puis à un troisième état de contrôle, sur un angle de champ de rotation prédéfini, la présence du signal de déclenchement étant ici contrôlée pendant un intervalle de temps de retard défini et une défaillance de phase étant signalée quand la durée du signal de déclenchement dépasse cet intervalle de temps de retard.

2. Procédé selon la revendication 1,
caractérisé en ce que
dans le deuxième état de contrôle, l'angle de rotation de comparaison du vecteur de tension est de 90 degrés au niveau électrique.

3. Procédé selon la revendication 1 ou 2,
caractérisé en ce que,
lorsque la valeur limite est sous-dépassée simultanément par les valeurs instantanées de deux courants de phase, une mesure de temps est lancée par l'intermédiaire des signaux de déclenchement des éléments de contrôle afférents pendant un intervalle de temps de retard séparé, une défaillance de phase étant signalée quand la durée des signaux de déclenchement dépasse cet intervalle de temps de retard.
